(19) Europäisches Patentamt
European Patent Office
Office européen des brevets

(11) **EP 2 518 711 A1**

(12) **EUROPEAN PATENT APPLICATION**

(43) Date of publication:
**31.10.2012 Bulletin 2012/44**

(51) Int Cl.:
***G09B 23/00*** *(2006.01)*

(21) Application number: **11290205.1**

(22) Date of filing: **28.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thales S.A.**
**92200 Neuilly sur Seine (FR)**

(72) Inventors:
• **Meyer, Christophe**
**92600 Asnières-sur-Seine (FR)**

• **Flacher, Fabien**
**92160 Antony (FR)**
• **Navarro, Laurent**
**75016 Paris (FR)**
• **Corruble, Vincent**
**75015 Paris (FR)**

(74) Representative: **Brunelli, Gérald**
**Marks & Clerk France**
**Immeuble Visium**
**22, avenue Aristide Briand**
**94117 Arcueil Cedex (FR)**

(54) **Multi-agent simulation system**

(57)     A multi-agent simulation system where the behavior of agents evolving in an environment comprising at least an area of interest and an area of secondary interest is simulated by the use of agents models wherein an agent or a group of agents is represented by a set of attributes comprising at least one attribute. The values of the attributes belonging to a set of attributes are updated by an agent model, a plurality of agents belonging to the area of secondary interest being aggregated automatically (103, 107) during the simulation into one or several groups of agents (108, 109, 110, 111) depending on the affinity *Aff*( ) between agents located in this area. The said affinity corresponds to a function of distances between attributes associated to couples of agents before the aggregation, the agents belonging to a group of agents sharing a single set of attributes, the values of the said set of attributes being updated by a single agent model allocated to the group.

EP 2 518 711 A1

**Description**

The invention relates to the field of large-scale multi-agent simulations, involving thousands autonomous and intelligent characters acting in a complex and dynamic environment. It is particularly, but not exclusively, applicable to simulators designed for many applications in various domains such as security, crisis management, urban planning, people training and video games.

In this specification, an agent designates a individual being endowed with intelligence such as a human being, an animal or a robot.

Additionally, an agent model designates a function or an algorithm that aims at modeling the behavior of an agent. An agent model determines the evolution of the values taken by a set of at least one attribute representing an agent. Attributes can be classified into two categories, the first category corresponding to physical attributes and the second category corresponding to psychological attributes. For example, a subset of attributes allocated to an agent corresponds to physical attributes such as the geographical coordinates of an agent. Additionally, another subset of attributes corresponds to the psychological attributes representing the emotional state of the said agent. A psychological attribute can be used for example in order to model the level of stress of an agent. The said attribute may be a real number comprised between 0 and 1. Other psychological attributes may be used in order to model fear or tiredness for example.

Simulating hundreds of thousands of individual agents within a very large environment like an airport, a crowded train station or a whole city, with credible behaviors, requires important computational power. This is due to the complexity of the microscopic agent models, used for instance for navigation or decision processes, that result in large states and actions spaces. Indeed, most of them require that each agent perceive its environment, update its internal variables, choose the most appropriate action and eventually communicate and learn. Reducing the complexity of the underlying algorithms is then a significant challenge.

Large-scale multi-agent simulations aim to simulate the largest possible number of virtual actors, for example more than 100.000 agents, driven by realistic behaviors, such as navigational, emotional, decisional or social. To provide the greatest possible immersion to the user, the simulator must provide a high level of realism. Thus, it must work in real time and in continuous space, and offer a full interactivity on the environment and the state of the actors. Another important property is the ability to calibrate the simulator with customer data, ideally taken at any level, that is to say from very precise microscopic data to high-level statistical information. Finally, the application must work on a correct standard computer, like for example a computer comprising an Intel® Core™ i7 with 4 Go of RAM.

The background art of the invention covers various fields, such as Multi-Agent Systems MAS, Multi-Resolution Modeling MRM and abstraction. Regarding the Multi-Agent Systems MAS, generating realistic behavior for virtual humans has been the subject of numerous studies. Systems like SOAR presented in the article of J. Laird entitled "Extending the Soar Cognitive Architecture", proceedings of the 1st Conference on Artificial General Intelligence (AGI-08), 2008, and like ACT-R presented in the written by J. Anderson, D. Bothell, M. Byrne, S. Douglass, C. Lebiere and Y. Qin entitled "An Integrated Theory of the Mind", Psychological Review, 2004 are excellent examples of cognitive architectures that provide a complex modeling of extremely advanced human reasoning capabilities at microscopic scale, based on studies about human memory, problem solving and skill acquisition. However, though these systems are applicable in scenes with a reasonable number of actors, they are inefficient to handle applications involving large populations of virtual humans on a standard computer. This limitation is also a disadvantage to the use of multi-agent platforms such as Cougaar presented in the article written by Helsinger and T. Wright entitled "Cougaar: A Robust Configurable Multi Agent Platform", proceedings of the 26th IEEE Aerospace Conference, 2005, which offer specific architectures able to distribute the virtual entities on different machines depending on the required computational load.

Attempts have been made to increase the number of simulated entities on a single computer by tuning the update time length given to each agent. To reach the amount of 200.000 vehicles simulated as individual autonomous agents with specific action selection mechanisms discrete calculation time steps of 1 second can be used. Similarly, the crowd simulation may be based on an update times reduction of non-visible agents and adapts their behavior to more simplified but less accurate microscopic agent models. Finally, the Process Manager described in the article from I. Wright and J. Marshall entitled "Egocentric AI Processing for Computer Entertainment: A Real-Time Process Manager for Games", proceedings of the 1 st International Conference on Intelligent Games and Simulation, 2000, dynamically chooses between several Artificial Intelligence update processes, full, time-sliced, postponed or replaced with simplified behavior and depending on the needs in computational resources. While those systems share the same philosophy, the first one sacrifices its real-time component for the benefit of an accurate result whereas the others elected to decrease the realism of the simulation to maintain its believability.

Some systems are able to simulate a very large number of agents using only macroscopic models. Crowd Patches as depicted in the written by Yersin, J. Maïm, J. Pettré and D. Thalmann entitled "Crowd Patches: Populating Large-Scale Virtual Environments for Real-Time Applications", proceedings of the 2009 Symposium on Interactive 3D Graphics and Games, 2009, can handle up to 3.700 actors by dividing the world into small convex areas where agents can navigate, and using offline computed paths and animations stored within each patch to steer them. Other approaches have been attempted through the simultaneous use of macroscopic and microscopic models to define the individual behaviors of each agent. For example, the solution proposed in the written by J. Maïm, B. Yersin, J. Pettré and D. Thalmann entitled "YaQ: An Architecture for Real-Time Navigation and Rendering of Varied Crowds", IEEE Computer Graphics and Applications, 2009, uses offline predefined macroscopic paths across the world to steer up to 35.000 pedestrians using various microscopic algorithms, depending on their position: potential fields on significant areas, Craig Reynolds's seeking on lower interest spots and linear steering toward their destination without collisions on unimportant regions. Similarly, Continuum Crowds described in the article written by A. Treuille, S. Cooper and Z. Popovic entitled "Continuum crowds", proceedings of the 33rd International Conference and Exhibition on Computer Graphics and Interactive Techniques, SIGGRAPH, 2006, represents agents as particles which are subjected to three fields, one field for their destination, one field for their speed and one field for their discomfort caused by the proximity of other agents that guide them to their destination. Thereby, those systems combine global path planning and local collision avoidance within a single global steering model. However, they focus on navigation issues and are not easily transposed to other levels of behavior models such as ones dealing with decisions or emotions. Moreover, they do not provide the expected level of interactivity.

Some approaches also exploit the principle of simultaneous use of microscopic and macroscopic models, but choose to partition the environment and implement a model type for each zone S. Stylianou, M. Fyrillas and Y. Chrysanthou are describing in the article entitled "Scalable Pedestrian Simulation for Virtual Cities", proceedings of the 11th ACM Symposium on Virtual Reality Software and Technology, 2004, a top-down approach for simulating pedestrians within a large city, which uses high level flows and distributions models to steer non-visible agents along a network of nodes that describe the accessible areas of a city, and a microscopic collision avoidance model with speed adjustment for visible actors. Similarly, the systems presented by E. Bourrel and V. Henn in the article entitled "Mixing micro and macro representations of traffic flow: a first theoretical step", proceedings of the 9th Euro Working Group on Transportation Meeting, 2002 simulate vehicles navigating in a static predesigned world. The entities use a macroscopic model based on the flow theory for low interest areas without crossroads, and a microscopic multi-agent car-following model for high interest areas. Those architectures can handle several thousand agents with high consistency level and offer a good interactivity with the agent's behavior within both macroscopic and microscopic areas. But they require a preprocessed environment and predefined transition functions between the agent models.

Other frameworks handle large number of agents by using nesting techniques. Thus, the Swarm system described by D. Hiebeler in the article "The Swarm Simulation System and Individual-based Modeling", proceedings of the 17th International Conference on Advanced Technology for Natural Resource Management, 1994, is based on a recursive organization, dealing with basic agents driven by rules and swarms, defined as clusters of agents which behaviors are the emergent phenomena of its components. The hierarchical organization is static and thus defines the accessible level of details of the simulation. In the article from S. Picault, P. Mathieu and Y. Kubera entitled "PADAWAN, un modèle multi-échelles pour la simulation orientée interactions", proceedings of the 18th Journées Francophones sur les Systèmes Multi-Agents, 2010, an extension of the interaction-oriented agent simulation JEDI, enhance the above concept by allowing entities to be dynamically nested into swarms. Indeed, a PADAWAN agent can be situated in one or multiple environments simultaneously and can encapsulate an environment, thus nesting agents situated in it. The hierarchical organization is then based on the environment structure but agents can migrate from one swarm to another. Moreover, the interactions can be defined per environment, allowing the creation of different behaviors per representation level. Such approaches are naturally well suited for the simulation of large scale environments, but they do allow the implementation of really different behavioral models and are constrained by an underlying fixed structure.

Another approach is described in the written by C. Brom and Z. Vlckova entitled "IVE: Virtual Humans' AI Prototyping Toolkit", International Journal of Computer and Information Science and Engineering, 2007. It introduces level of detail techniques on human decision and behavior. This framework utilizes a hierarchical reactive planning mechanism to control the agents, which uses a tree structure. Those agents are placed within a 2D world that is split into atomic cells which are hierarchically organized within a topology tree. Each level of this topology tree is linked to one of the behavioral tree, defining accessible LOD ranks. Thus, IVE can adapt the level of detail of the simulation in order to simplify the behaviors of the unobserved agents - and then reduce the computational needs - hence dealing with more than 10.000 agents simultaneously. But it requires the use of a discrete hierarchical world statically linked with the tree structure used by the decision process.

The field of multi-agent systems is not the only one to be relevant in the context of the invention. Thus, Multi-Resolution Modeling MRM, which is the joint execution of different models of the same phenomenon within the same simulation or across several heterogeneous systems, provides several relevant approaches. In selective viewing, only the most detailed agent model is executed, and all other ones are emulated by selecting information, or views, from the representation of the most detailed model. In aggregation / disaggregation techniques, one model is executed at a given time, but instead of being the most detailed one like in selective viewing, the choice of the model depends on the user needs. This approach has several variants, such as full disaggregation, partial disaggregation, playboxes and pseudo- disaggregation. Variable Resolution Modeling allows the construction of families of models which support dynamic changes in resolution as presented in the written by P. Davis and R. Hillestad entitled "Families of Models that Cross Levels of Resolution: Issues for Design, Calibration and Management", proceedings of the 25th Winter Simulation Conference, 1993, by introducing constraints during their creation, such as the standardization of all the parameters in a dictionary, the creation of a hierarchical structure for the variables or the definition of calibration rules between models.

Multiple Representation Entities as presented in the written by P. Reynolds and A. Natrajan entitled "Consistency Maintenance in Multiresolution Simulations", ACM Transactions on Modeling and Computer Simulation, 1997, is a final example from the MRM field which is of particular interest here. It uses concurrent representations to ensure simulation consistency and reduce computation costs. Its approach is to maintain, at all time, all representations through all available models of a given phenomenon, using appropriate mapping functions to translate changes between two representations. The goal is to permit constant interactions between all the representations, to avoid loss of resources or time when scaling from one model to another. This approach is a powerful way to deal with complex MRM, which offers a remedy for the weakness of aggregation / disaggregation methods and requires lower resources than simultaneous execution of multiple models. But it only gives mathematical requirements for mapping functions, through the use of attributes dependency graphs. Also, it does not identify the representation at any level nor relationships between representations.

Concerning the notion of abstraction, it can be defined as the human capacity to simplify the complexities of the real world by ignoring unimportant details and highlight only relevant information. Abstraction is interesting because the loss of details is related to a gain in computing time and available memory. Indeed, several works have studied abstraction as a transformation of an initial representation space to an abstract representation space in which the initial problem is solved with a lower computational cost. This is described in the article written by J. D. Zucker entitled "A grounded theory of abstraction in artificial intelligence", Philosophical Transactions of the Royal Society, volume 358, number 1435, 2003. Those studies have highlighted several abstraction operators which work on the representation of an object, thus a virtual actor, a virtual machine or any other simulation events, in order to automatically create a lower-level description of that object. Those operators are listed below :

- aggregation: this operator compose several representations to obtain a more compact one;
- discretization: this operator replace the continuous domain of an attribute by a set of symbols;
- selection: this operator hide the attributes that are considered irrelevant;
- weighting: this operator give weights to attributes depending on their importance.

Abstraction provides powerful solutions to simplify the representation of the simulated objects, and thus reduce computational needs. However, it is theoretical and does not provides in itself an automatic way to build transition operators between representations. In fact, notions of detail and relevant information are context dependant and, until now, must be defined by the designer of the system.

One aim of the invention is notably to overcome the abovementioned drawbacks.

To this end, the invention relates to a multi-agent simulation system where the behavior of agents evolving in an environment comprising at least an area of interest and an area of secondary interest is simulated by the use of agents models. An agent or a group of agents is represented by a set of attributes comprising at least one attribute, the values of the attributes belonging to a set of attributes being updated by an agent model, a plurality of agents belonging to the area of secondary interest being aggregated automatically during the simulation into one or several groups of agents depending on the affinity $Aff(\ )$ between agents located in this area. The said affinity corresponds to a function of distances between attributes associated to couples of agents before the aggregation. The agents belonging to a group of agents sharing a single set of attributes, the values of the said set of attributes being updated by a single agent model allocated to the group.

Attributes of agents are, for example, classified into two categories, the first category corresponding to physical attributes and the second category corresponding to psychological attributes, the affinity function between two agents being a combination of a spatial distance $D_\theta$ between their physical attributes and a psychological distance $D_\psi$ between their psychological attributes.

The spatial distance $D_\theta$ is, for example, the Euclidean distance between the two agents.

The spatial distance $D_\theta$ is determined, for example, by taking into account the physical path between the two agents.

The psychological distance $D_\psi$ is, for example, the norm between the vectors of psychological attributes.

The affinity function is, for example, a continuous positive function, strictly decreasing as $D_\theta$ or $D_\psi$ increases.

For example, a category of attributes comprises sub-categories.

For example, agents are aggregated into a group of agents by using an aggregation function $F_{Ag}$, the said function being split into a plurality of sub-functions, each sub-function operating on attributes of the same category or sub-category.

Memory functions are used, for example, to save the values of attributes before aggregation in order to facilitate a further disaggregation of the group.

For example, agents that have been aggregated into a group can be separated by the use of a disaggregation function, the said disaggregation function using the values of attributes saved by the memory functions in order to determine a set of attributes for each agent of the disaggregated group.

For example, the quantity of data stored in the system by the memory functions is controlled for each aggregated group, the said control being settled by keeping the data memorized after the aggregation, by creating a statistical distribution for each attribute among all the aggregated agents after a predefined period of time and by erasing all stored data if the agents have been aggregated after a predetermined period of time.

For example, the simulated environment is a 3D representation of a city.

The simulated agents can represent a human being, an animal or a robot.

A plurality of aggregated groups are aggregated, for example, into a unique group, a single set of attributes being associated to the said group, the values of the said set of attributes being updated by a single agent model.

Embodiments of the present invention will now be described by way of example only with reference to the accompanying drawings where like parts are provided with corresponding reference numerals and in which:

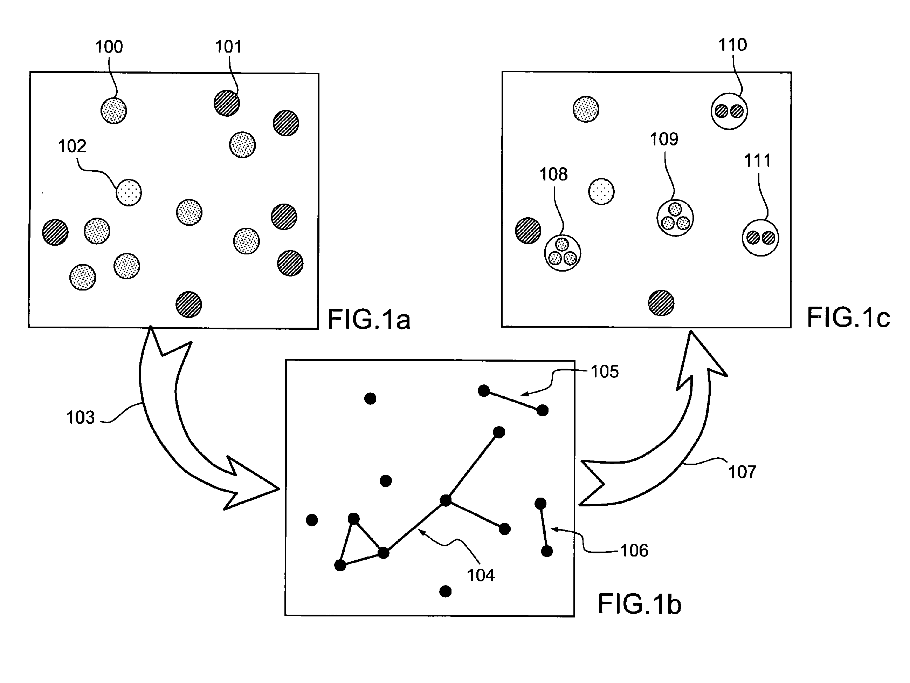

Figure 1 is a schematic representation of the aggregation of agents.

The invention aims to simulate precisely the behavior of actors in areas of high level of interest with microscopic models and to simulate less precisely but more economically, that is to say resource-wise, behavior of actors located elsewhere with macroscopic models.

Several criteria have motivated the choice of using multiple models. Firstly, it allows the capture of all the aspects of a given phenomenon. Indeed, low resolution models allow a better overall understanding, by focusing on the big picture rather than on the details, whereas high resolution models give an accurate comprehension of a specific phenomenon and tend to simulate reality. Secondly, such a choice allows the finding of a good balance between computing resources and simulation properties, such as realism, coherence and complexity. Indeed, although high resolution models are very accurate for modeling individual behaviors, they often have high computational and memory needs. On the other hand, low resolution models can save resources but tend to give less accurate results. Mixing models with different levels of resolution can hopefully lead to the best of both worlds. Finally, using multiples models helps design systems by mimicking the human reasoning ability which already works at different levels of understanding and simplifies the calibration of the models by allowing the use of available data matching at least one of the implemented models.

The fundamental choice described above leads to several challenges which can be classified along two axes.

The first axis relates to the models themselves. One must define the way they will be used that is to say one model at a time or one model per area of interest or all models simultaneously. Additionally, the way the models will interact each other should also be defined, for example by using some of the Multi Resolution Modeling methods described above.

The second axis relates to the physical agents. One must define how to manage a continuous 3D environment with complex moving agents, and how the physical position of the agents will have an impact on the model used.

This first axis focuses on the scalability aspect of the implemented agent models. It attempts to provide an efficient method for navigating dynamically from one model to another. The primary decision made is the choice of the aggregation / disaggregation technique to define how the models are used. This way, several agents are aggregated into a group of agents, then several groups are aggregated into a crowd, and finally several crowds are aggregated into a flow. The different agent models, that is to say agent, group, crowd and flow, are linked to each aggregation / disaggregation step.

Let $M_1$ be an agent model. The representation of an agent $A_1$ in $M_1$ at time $t$ is denoted by the function $Rep$ $(A_1;M_1;t)$ and is the vector of inner attributes of $A_1$ required by $M_1$ to operate. $a_{i,j}$ represents the j-th attribute of an agent $A_i$. The number of attributes allocated the agent $A_1$ using the agent model $M_1$ is denoted by $|M_1|$. Then, the representation of an agent $A_1$ in $M_1$ at time $t$ is :

$$Rep(A_1;M_1;t) = \begin{pmatrix} a_{1;1}(t) \\ a_{1;2}(t) \\ \vdots \\ a_{1;|M_1|}(t) \end{pmatrix}$$

Let $M_2$ be another agent model. We assume that $M_2$ is more abstract than $M_1$, that is to say that the representation level of $M_1$ is higher than the one of $M_2$. In other words, $M_1$ has an higher resolution than $M_2$. Finally, let $A = \{A_1; A_2; ...; A_N\}$ be a set of N agents, driven by the model $M_1$. The goal is to find the aggregation function $F_{Ag}$ able to transform the representation of $A$ in $M_1$ at time $t$, into the representation of the aggregate $A'$ controlled by the model $M_2$ at the same time:

$$Rep(A; M_1; t) = (Rep(A_1; M_1; t); ...; Rep(A_N; M_1; t)) = \begin{pmatrix} a_{1;1}(t) & \cdots & a_{N;1}(t) \\ \vdots & \ddots & \vdots \\ a_{1;|M_1|}(t) & \cdots & a_{N;|M_1|}(t) \end{pmatrix}$$

$$F_{Ag}\left[Rep(A; M_1; t)\right] = Rep(A'; M_2; t)$$

The aggregate is associated to a single set of attributes which allow to reduce the computation complexity when applying the agent model $M_2$ in order to update the attributes values.

As is, such function is difficult to define or to learn because it attempts to aggregate attributes which are a priori not semantically connected, such as the velocity of the agents and their thirst level. The invention advantageously split the aggregation function $F_{Ag}$ into several sub functions, each operating on parameters with a similar meaning, therefore likely to share a common dynamic. In this end, we classify each agent's attributes into two categories, physical and psychological, and several subcategories, like physical traits, resources or spatial data for the first group and emotions, internal variables or knowledge for the second. Then, we partition the representation of the agents in each model. The goal is then to find the aggregation sub functions corresponding to each category and/or sub-category of attributes, which guarantees the consistency of the models and allows a future disaggregation.

The notion of consistency is central in such an approach because it symbolizes the amount of essential information lost during the aggregation / disaggregation process and is linked to the global coherence of the simulation. A relevant definition of consistency between a high level model $M$ and a low level model $M'$ has been given in written by P. Davis and R. Hillestad entitled "Families of Models that Cross Levels of Resolution: Issues for Design, Calibration and Management", proceedings of the 25th Winter Simulation Conference, 1993, by the comparison between the projected state of an aggregate of high level entities which have followed $M$, and the projected state of the same aggregate initially controlled by $M'$. The projection symbolizes that only a part of the final states is relevant to define the consistency. Advantageously, the invention uses this notion to determine which kind of sub function fits best with which category and/or sub-category of attributes. Thus, machine learning techniques would allow the system to find the best sub-function for each attributes class between two agent models among a group of predefined operators such as summation SUM, minimum MIN, maximum MAX, median MEDIAN or mean MEAN, by optimizing the consistency of both models.

In parallel to the definition of the aggregation sub-functions, an associated disaggregation function $F_{Disag}$ must be found. This disaggregation operator aims to recreate $A$ from an aggregate $A'$ at time $t'$ with respect to the evolution of $A'$ between $t$ and $t'$. To do so, memory functions are defined whose goal is to save attributes at aggregation time to facilitate the disaggregation process :

$$Mem(A; M_1; t) = (Mem(A_1; M_1; t); ...; Mem(A_N; M_1; t)) = \begin{pmatrix} m_{1;1}(t) & \cdots & m_{N;1}(t) \\ \vdots & \ddots & \vdots \\ m_{1;|M_1|}(t) & \cdots & m_{N;|M_1|}(t) \end{pmatrix}$$

$$F_{Disag}\left[Rep(A'; M_2; t'); Mem(A; M_1; t)\right] = Rep(A; M_1; t')$$

There is a strong link between an aggregation function, its opposite disaggregation operator and the associated memory function. As an example, let us consider the resources of an agent. An intuitive aggregation operator would be the SUM as we may consider that a group of agents disposes of the sum of the resources of each individual. In this case, the memory function would be, for each resource attribute, a RATIO operator between the initial amount of the aggregated agent and the amount of the aggregate. Then, the disaggregation function would be a simple MULTIPLY between the new amount of the aggregate and the memory of the agent, plus a random distribution of surplus between the agents.

Finally, the memory consumption can be tuned by controlling the quantity of data stored by the memory functions for each aggregated agents. Thus, gradual forgetting methods can be implemented, which keeps all the data of *Mem* $(A;M_1;t)$ just after the aggregation, then creates a statistical distribution for each attribute among all the aggregated agents after a predefined period of time and finally erase all stored data if the agents have been aggregated after a long period. In this last case, random attributes are generated for the disaggregation process.

The second axis focuses on the spatial aggregation of agents and addresses the issue of finding which agents should be aggregated to form a representation at a less detailed level. The philosophy employed here is to consider a group of humans as a set of individuals with similar psychological profiles and a common physical space.

To this end, two distances are defined based on the two main attributes classes defined before: a spatial distance $D_\theta$, and a psychological distance $D_\psi$. The first one can be a trivial Euclidean distance or a more complex computation taking into account the physical path between the two agents. The second distance represents how two actors share the same thoughts, for example the same goal, the same dominant emotion or the same desire. It can be the norm between the vectors of psychological attributes or the similarity between the long term goals chosen by the agent. Those distances are combined by a given function f to define the affinity between two agents $A_1$ and $A_2$ :

$$Aff(A_1;A_2) = f\left[D_\theta(A_1;A_2);D_\psi(A_1;A_2)\right]$$

This affinity function *f* is a continuous positive function, strictly decreasing as $D_\theta$ or $D_\psi$ increases. It represents the connection between two agents within the simulation, only based on their individual states. Their environment is taken into account with the definition of events. Those symbolize points of particular attention which require the creation of an area of high level of interest to increase the overall consistency of the simulation. Thus, the observer's point of view, an accident or an evacuation can lead to the creation of simulation events. Let $E = \{E_1;E_2;...;E_M\}$ be a set of M events generated by the simulation. The link between an agent and an event is characterized by a new pair of distances similar to those defined above. Although the meaning of the physical distance remains the same as the one between two agents, the signification of the psychological one is a bit different, and symbolizes how an actor is sensitive to the event. For example, if we consider an agent collapsing in the street, we can assume the impact of this event to be higher on a doctor walking nearby than on a child or an employee in a hurry. Those distances are combined to define the affinity between two agents $A_1$ and $A_2$ and an event $E_i \in E$ :

$$\begin{cases} D_\theta(A_1;A_2;E_i) = \mathrm{Min}\left[D_\theta(A_1;E_i);D_\theta(A_2;E_i)\right] \\ D_\psi(A_1;A_2;E_i) = \mathrm{Min}\left[D_\psi(A_1;E_i);D_\psi(A_2;E_i)\right] \end{cases}$$

$$Aff(A_1;A_2;E_i) = f\left[D_\theta(A_1;A_2;E_i);D_\psi(A_1;A_2;E_i)\right]$$

where Min[$a$;$b$] represents the minimum selected from *a* and *b*.

Finally, the link between the two agents $A_1$ and $A_2$ and $E$ can be defined by using the following expression :

$$Aff\left(A_1;A_2;E\right)=\operatorname*{Max}_{i\in[1;M]}\left[Aff\left(A_1;A_2;E_i\right)\right]$$

where $\operatorname*{Max}_{i\in[1;M]}\left[c_i\right]$ represents the maximum of $c_i$ for $i\in[1;M]$.

This link is finally used to define the aggregation utility $U_{Ag}(A_1,A_2)$ between two agents $A_1$ and $A_2$. This utility guides the choice of which agents to aggregate because they are close in their representation space and are not of interest for the simulation. The aggregation utility $U_{Ag}(A_1,A_2)$ can be expressed by using the following function :

$$U_{Ag}\left(A_1;A_2\right)=f\left[Aff\left(A_1;A_2\right);Aff\left(A_1;A_2;E\right)\right]$$

The computation of the aggregation utilities between the agents leads, for example, to the creation of an aggregation graph, which vertices are the agents in the simulation. An edge of the graph is created when the value of the aggregation utility is greater than a given threshold. The weight of the edge is set to the value of the utility.

Figure 1 a shows agents symbolized by circles with different textures 100, 101, 102 and where a given texture represents their psychological states. It appears that in this example, several agents have the same psychological state.

The corresponding graph is shown in figure 1 b. This structure allows optimizing the repartition of the agents within the created groups as shown in figure 1c with the use of specific graph algorithms.

The disaggregation of an aggregate $A'$ proceeds of the same idea, although it just take into accounts the events defined in the simulation. Thus, an affinity between $A'$ and an event $E_i \in E$ can be defined, then the affinity between $A'$ and $E$, and finally the disaggregation utility $U_{Disag}(A')$ which guides the choice of which aggregate to split because its representation grain is too coarse for the area of interest where it stands:

$$Aff\left(A';E_i\right)=f\left[D_\theta\left(A';E_i\right);D_\psi\left(A';E_i\right)\right]$$

$$Aff\left(A';E\right)=\operatorname*{Max}_{i\in[1;M]}\left[Aff\left(A';E_i\right)\right]$$

$$U_{Disag}\left(A'\right)=f\left[Aff\left(A';E\right)\right]$$

The invention is a novel approach of dynamic level of detail LOD for large scale simulations, which breaks from the general habit of using a single level of representation. Instead, it proposes the use of behavioral LOD and introduces the notions of dynamic change of representation and spatial aggregation. Hence, it provides the following advantages :

- coupled with several behavioral models at different resolutions, it allows the automatic design of multi-scale agent-based simulations;
- it is able to determine by itself the most suitable representation level for each agent, regarding the simulation context;
- it can automatically find transition operators between two consecutive representations;
- it allows the automatic calibration of behavioral models using customer data (statistics);
- it guarantees the consistency of the multi-model simulation based on customer criteria.

**Claims**

1.  A multi-agent simulation system where the behavior of agents evolving in an environment comprising at least an area of interest and an area of secondary interest is simulated by the use of agents models **characterized in that** an agent or a group of agents is represented by a set of attributes comprising at least one attribute, the values of the attributes belonging to a set of attributes being updated by an agent model, a plurality of agents belonging to the area of secondary interest being aggregated automatically (103, 107) during the simulation into one or several groups of agents (108, 109, 110, 111) depending on the affinity *Aff*( ) between agents located in this area, the said affinity corresponding to a function of distances between attributes associated to couples of agents before the aggregation, the agents belonging to a group of agents sharing a single set of attributes, the values of the said set of attributes being updated by a single agent model allocated to the group.

2.  A multi-agent simulation system according to claim 1 wherein attributes of agents are classified into two categories, the first category corresponding to physical attributes and the second category corresponding to psychological attributes, the affinity function between two agents being a combination of a spatial distance $D_\theta$ between their physical attributes and a psychological distance $D_\psi$ between their psychological attributes.

3.  A multi-agent simulation system according to claim 2 wherein the spatial distance $D_\theta$ is the Euclidean distance between the two agents.

4.  A multi-agent simulation system according to claim 2 wherein the spatial distance $D_\theta$ is determined by taking into account the physical path between the two agents.

5.  A multi-agent simulation system according to any of claims 2 to 4 wherein the psychological distance $D_\psi$ is the norm between the vectors of psychological attributes.

6.  A multi-agent simulation system according to any of claims 2 to 5 wherein the affinity function is a continuous positive function, strictly decreasing as $D_\theta$ or $D_\psi$ increases.

7.  A multi-agent simulation system according to any of the preceding claims wherein a category of attributes comprises sub-categories.

8.  A multi-agent simulation system according to any of the preceding claims wherein agents are aggregated into a group of agents by using an aggregation function $F_{Ag}$, the said function being split into a plurality of sub-functions, each sub-function operating on attributes of the same category or sub-category.

9.  A multi-agent simulation system according to any of the preceding claims, wherein memory functions are used to save the values of attributes before aggregation in order to facilitate a further disaggregation of the group.

10. A multi-agent simulation system according to claim 9 wherein agents that have been aggregated into a group can be separated by the use of a disaggregation function, the said disaggregation function using the values of attributes saved by the memory functions in order to determine a set of attributes for each agent of the disaggregated group.

11. A multi-agent simulation system according to claim 8 wherein the quantity of data stored in the system by the memory functions is controlled for each aggregated group, the said control being settled by keeping the data memorized after the aggregation, by creating a statistical distribution for each attribute among all the aggregated agents after a predefined period of time and by erasing all stored data if the agents have been aggregated after a predetermined period of time.

12. A multi-agent simulation system according to any of the preceding claims, wherein the simulated environment is a 3D representation of a city.

13. A multi-agent simulation system according to any of the preceding claims, wherein the simulated agents represent a human being, an animal or a robot.

14. A multi-agent simulation system according to any of the preceding claims wherein a plurality of aggregated groups are aggregated into a unique group, a single set of attributes being associated to the said group, the values of the said set of attributes being updated by a single agent model.

FIG.1a

FIG.1b

FIG.1c

Europäisches
Patentamt

European
Patent Office

Office européen
des brevets

**EUROPEAN SEARCH REPORT**

Application Number

EP 11 29 0205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. Accordingly, no documentary evidence is found to be required. For further details see the Notice from the European Patent Office dated 1 October 2007 (OJ 11/2007; p592-593) and the accompanying Opinion.<br>----- | 1-14 | INV.<br>G09B23/00 |
| | | | TECHNICAL FIELDS<br>SEARCHED (IPC)<br><br>G09B |

The present search report has been drawn up for all claims

| Place of search | Date of completion of the search | Examiner |
|---|---|---|
| Munich | 22 November 2011 | Lopes Margarido, C |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. LAIRD.** Extending the Soar Cognitive Architecture. *proceedings of the 1st Conference on Artificial General Intelligence (AGI-08,* 2008
- **J. ANDERSON ; D. BOTHELL ; M. BYRNE ; S. DOUGLASS ; C. LEBIERE ; Y. QIN.** An Integrated Theory of the Mind. *Psychological Review,* 2004
- **HELSINGER ; T. WRIGHT.** Cougaar: A Robust Configurable Multi Agent Platform. *proceedings of the 26th IEEE Aerospace Conference,* 2005
- **I. WRIGHT ; J. MARSHALL.** Egocentric AI Processing for Computer Entertainment: A Real-Time Process Manager for Games. *proceedings of the 1 st International Conference on Intelligent Games and Simulation,* 2000
- **YERSIN ; J. MAÏM ; J. PETTRÉ ; D. THALMANN.** Crowd Patches: Populating Large-Scale Virtual Environments for Real-Time Applications. *proceedings of the 2009 Symposium on Interactive 3D Graphics and Games,* 2009
- **J. MAÏM ; B. YERSIN ; J. PETTRÉ ; D. THALMANN.** YaQ: An Architecture for Real-Time Navigation and Rendering of Varied Crowds. *IEEE Computer Graphics and Applications,* 2009
- **A. TREUILLE ; S. COOPER ; Z. POPOVIC.** Continuum crowds. *proceedings of the 33rd International Conference and Exhibition on Computer Graphics and Interactive Techniques,* 2006
- **S. STYLIANOU ; M. FYRILLAS ; Y. CHRYSANTHOU.** Scalable Pedestrian Simulation for Virtual Cities. *proceedings of the 11th ACM Symposium on Virtual Reality Software and Technology,* 2004

- **E. BOURREL ; V. HENN.** Mixing micro and macro representations of traffic flow: a first theoretical step. *proceedings of the 9th Euro Working Group on Transportation Meeting,* 2002
- **D. HIEBELER.** The Swarm Simulation System and Individual-based Modeling. *proceedings of the 17th International Conference on Advanced Technology for Natural Resource Management,* 1994
- **S. PICAULT ; P. MATHIEU ; Y. KUBERA.** PADAWAN, un modèle multi-échelles pour la simulation orientée interactions. *proceedings of the 18th Journées Francophones sur les Systèmes Multi-Agents,* 2010
- **C. BROM ; Z. VLCKOVA.** IVE: Virtual Humans' AI Prototyping Toolkit. *International Journal of Computer and Information Science and Engineering,* 2007
- **P. DAVIS ; R. HILLESTAD.** Families of Models that Cross Levels of Resolution: Issues for Design, Calibration and Management. *proceedings of the 25th Winter Simulation Conference,* 1993
- **P. REYNOLDS ; A. NATRAJAN.** Consistency Maintenance in Multiresolution Simulations. *ACM Transactions on Modeling and Computer Simulation,* 1997
- **J. D. ZUCKER.** A grounded theory of abstraction in artificial intelligence. *Philosophical Transactions of the Royal Society,* 2003, vol. 358 (1435